# EUROPEAN PATENT APPLICATION

(11) **EP 2 015 496 A1**
(43) Date of publication of application: **14.01.2009**
(21) Application number: 07742678.1
(22) Date of filing: 27.04.2007
(51) Int. Cl.: H04L 1/16, H04L 1/00, H04L 29/08, H04Q 7/38

(54) **BASE STATION, MOBILE STATION, AND COMMUNICATION METHOD**

(30) Priority: 01.05.2006 JP 2006127997
(71) Applicant: NTT DoCoMo, Inc., Chiyoda-ku Tokyo 100-6150 (JP)
(72) Inventor: UMESH, Anil, Tokyo 100-6150 (JP); ABETA, Sadayuki, Tokyo 100-6150 (JP)
(74) Representative: HOFFMANN EITLE
(86) International application number: PCT/JP2007/059243
(87) International publication number: WO 2007/129626

(57) **Abstract**

A base station for retransmitting a transmission packet in response to a retransmission request for the transmission packet from a mobile station includes a retransmission control unit configured to receive the retransmission request from the mobile station; a scheduling unit configured to determine an available packet size on the same logical channel as used for the transmission packet, when channel quality at the time of retransmitting the transmission packet in response to the retransmission request is improved compared to channel quality at the time of initially transmitting the transmission packet; a segmentation/concatenation unit configured to segment a packet to be transmitted on the same logical channel as used for the transmission packet based on the available packet size determined by the scheduling unit; and a multiplexing unit configured to multiplex the transmission packet to be retransmitted and the packet segmented by the segmentation/concatenation unit.

## Description

### BACKGROUND OF THE INVENTION

### 1. Field of the Invention

The present invention relates to a base station for retransmitting a transmission packet in response to a retransmission request for the transmission packet from a mobile station. The present invention also relates to a mobile station for retransmitting a transmission packet in response to a retransmission request for the transmission packet from a base station. The present invention also relates to a communication method of retransmitting, at a transmitting apparatus, a transmission packet in response to a retransmission request for the transmission packet from a receiving apparatus.

### 2. Description of the Related Art

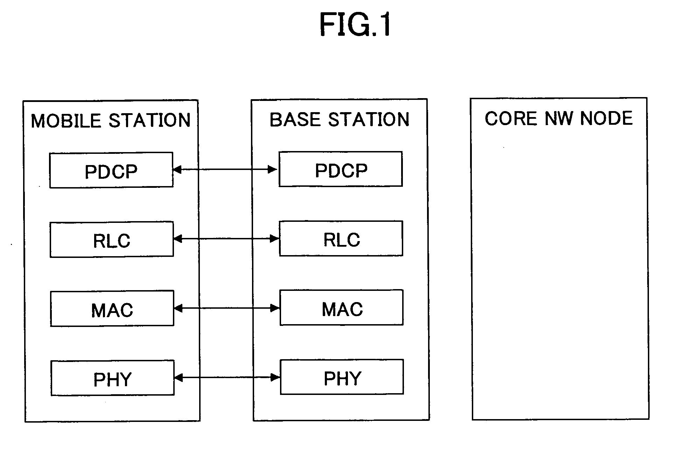

As shown in Fig. 1, a protocol stack for radio interfaces is defined in 3GPP Evolved UTRA and UTRAN, in order to transmit user data between a base station and a mobile station (see 3GPP TR25.813 v0.8.3, for example). The protocol stack includes a PDCP (Packet Data Convergence Protocol) layer, an RLC (Radio Link Control) layer, a MAC (Medium Access Control) layer, and a PHY (Physical) layer. The PDCP layer, the RLC layer, the MAC layer, and the PHY layer are terminated at the mobile station and the base station.

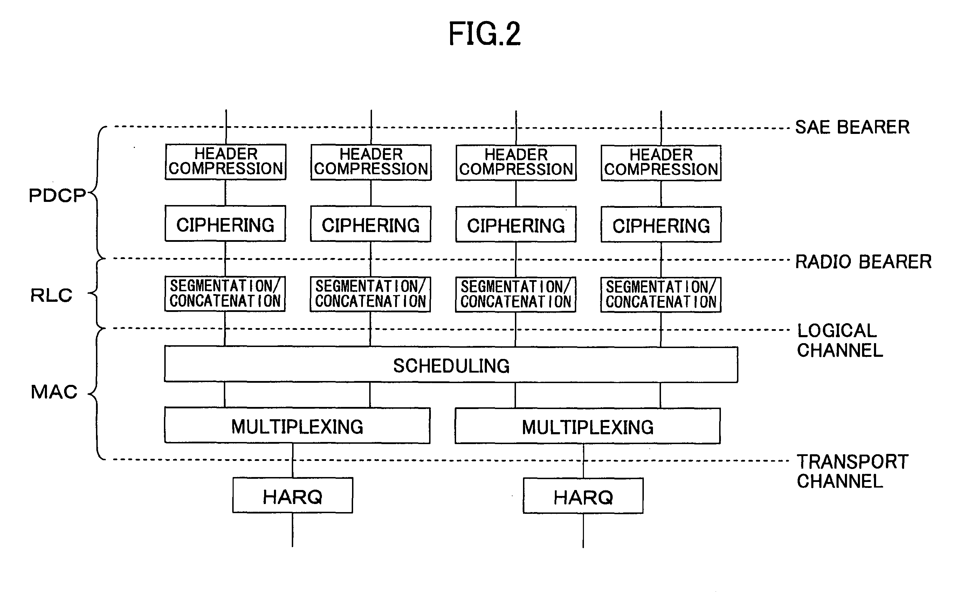

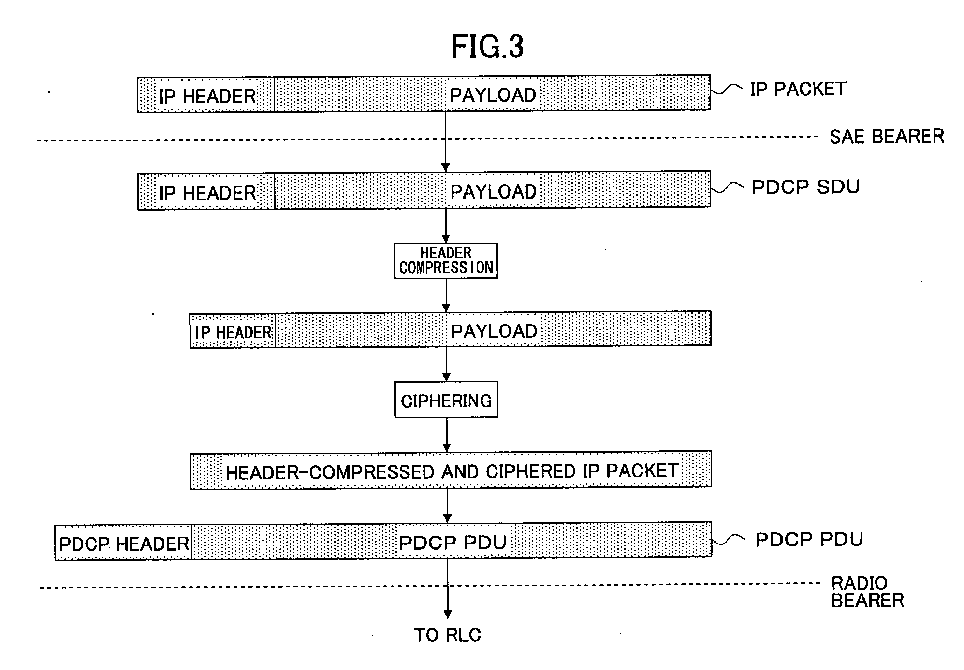

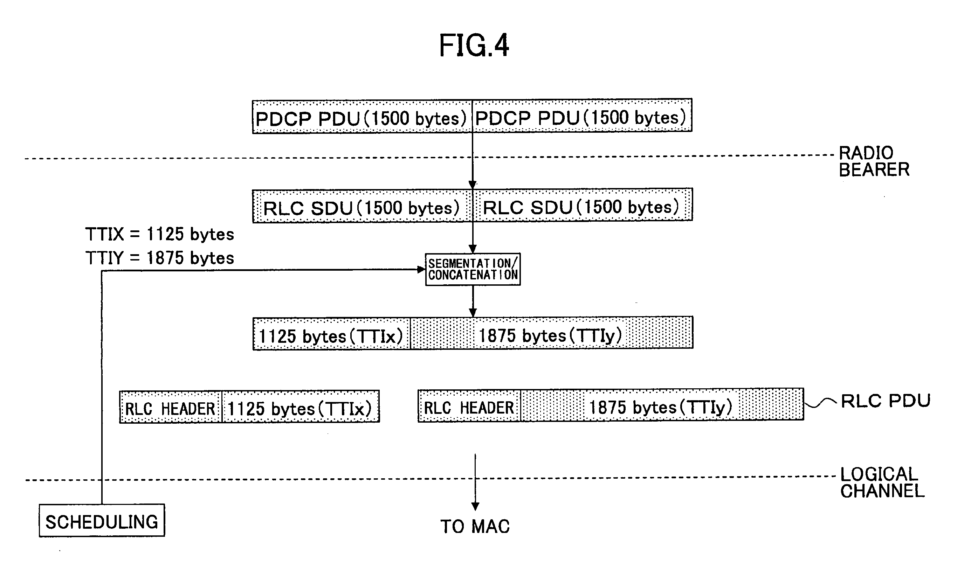

Figs. 2-4 show a process for transmitting user data at the base station using this protocol stack. Fig. 2 shows function blocks in each layer. Fig. 3 specifically shows a process for transmitting user data in the PDCP layer. Fig. 4 specifically shows a process for transmitting user data in the RLC layer.

With reference to Figs. 2 and 3, the process for transmitting user data in the PDCP layer is described below. The PDCP layer receives a data packet via a radio bearer. For example, this data packet corresponds to an IP packet and the PDCP layer recognizes the data packet as a PDCP SDU (PDCP Service Data Unit). The PDCP layer performs header compression (ROHC) and ciphering of the PDCP SDU and transmits the packet (PDCP SDU) to the RLC layer. Header compression or ciphering may not be performed depending on the application or the operation. The PDCP layer recognizes the packet to be transmitted to the RLC layer as a PDCP PDU (PDCP Protocol Data Unit).

With reference to Figs. 2 and 4, the process for transmitting user data in the RLC layer is described below. The RLC layer receives a data packet from the PDCP layer or via the radio bearer. This data packet corresponds to the PDCP PDU or the IP packet and the RLC layer recognizes the data packet as an RLC SDU (RLC Service Data Unit). The RLC layer performs segmentation or concatenation of the RLC SDU according to the transport block size of the TTI (Transmission Time Interval) to which a transmission opportunity is allocated. Then, the RLC layer transmits the segmented or concatenated packet to the MAC layer via a logical channel. The RLC layer recognizes the segmented or concatenated packet as an RLC PDU (RLC Protocol Data Unit). Upon segmentation or concatenation, the RLC layer segments or concatenates the RLC SDU(s) into the RLC PDU(s) with a suitable size according to the instruction from a scheduling unit (transport format selecting unit) in the MAC layer. Then, the RLC layer transmits the RLC PDU to the MAC layer via the logical channel. The RLC layer stores this RLC PDU to retransmit it according to ARQ (Automatic Repeat reQuest) as required.

The MAC layer receives the segmented or concatenated packet via the logical channel. This segmented or concatenated packet corresponds to the RLC PDU and the MAC layer recognizes the packet as a MAC SDU (MAC Service Data Unit). The MAC layer appropriately maps the MAC SDU to a transport block. The MAC layer multiplexes the MAC SDU and the RLC PDU received via another logical channel as needed. The MAC layer performs HARQ (Hybrid Automatic Repeat reQuest) for the data mapped to the transport block and transmits the transport block to the PHY layer. The MAC layer retransmits the transport block according to HARQ in response to a retransmission request from the mobile station.

### SUMMARY OF THE INVENTION

### [Problem(s) to be solved by the Invention]

The size of the transport block transmitted to the mobile station in the PHY layer is adaptively determined to be a suitable size by the scheduling unit (transport format selecting unit) in the MAC layer in consideration of channel quality of the radio link between the base station and the mobile station. The scheduling unit determines the transport block size (or the RLC PDU size corresponding to the transport block size) so that segmentation or concatenation is appropriately performed in the RLC layer.

In this manner, the transport block size (or the RLC PDU size) is adaptively determined based on channel quality at the time of transmission. Accordingly, an RLC PDU with an optimum size is generated based on channel quality. However, when the RLC PDU is retransmitted, channel quality may vary because of time-lag between initial transmission of the RLC PDU and retransmission of the RLC PDU. In other words, the optimum transport block size at the time of initial transmission may not apply to the size at the time of retransmission. When channel quality is improved at the time of retransmission, the transport block size at the time of initial transmission may be small for retransmission. On the other hand, when channel quality is degraded at the time of retransmission, the transport block size at the time of initial transmission may be large for retransmission.

Accordingly, when channel quality is improved at the time of retransmission, an available transport block size increases compared to the size at the time of initial transmission. Thus, transmitting only the retransmission packet causes a problem of unused or wasted radio resources.

According to the structure shown in Fig. 2, the MAC layer can multiplex RLC PDUs from various logical channels into a single transport block. Thus, RLC PDUs from another logical channel may be multiplexed into unused radio resources. For this purpose, the mobile station must establish multiple logical channels. In addition, although RLC PDUs from another logical channel can be multiplexed, data on different logical channels have different levels of QoS (Quality of Service). When logical channels with different levels of QoS are multiplexed into a single transport block, packets must be typically transmitted according to requirements for a higher level of QoS. In view of a logical channel with a lower level of QoS, data are transmitted with overquality, which causes a problem of wasted radio resources.

For example, it is assumed that one logical channel is used for a service with strict requirements for delay such as a VoIP (Voice over Internet Protocol) service and the other logical channel is used for a service with loose requirements for delay such as a best-effort data communication service. For the VoIP service with strict requirements for delay, the transmitting side uses transmission power with which the receiving side can receive data without retransmission according to HARQ. For the best-effort data communication service with loose requirements for delay, on the other hand, the transmitting side uses transmission power with which the time diversity gain and the Incremental Redundancy gain can be achieved by retransmission according to HARQ. When VoIP data and best-effort data are multiplexed, quality requirements for the VoIP service must be satisfied. Accordingly, transmission power is needed with which the receiving side can receive data without retransmission of the multiplexed transport block according to HARQ. In this case, the time diversity gain and the Incremental Redundancy gain (approximately, 2 dB), which could be otherwise achieved, cannot be achieved for the best-effort data, which causes a problem of wasted transmission power as well as a problem of degraded radio capacity.

In view of the aforementioned problems in the related art, it is a general object of the present invention to efficiently use radio resources and to maintain quality of service at the time of retransmission.

### [Means for solving the Problem]

In one aspect of the present invention, there is provided a base station for retransmitting a transmission packet in response to a retransmission request for the transmission packet from a mobile station, including:
a retransmission control unit configured to receive the retransmission request from the mobile station;
a scheduling unit configured to determine an available packet size on the same logical channel as used for the transmission packet, when channel quality at the time of retransmitting the transmission packet in response to the retransmission request is improved compared to channel quality at the time of initially transmitting the transmission packet;
a segmentation/concatenation unit configured to segment a packet to be transmitted on the same logical channel as used for the transmission packet based on the available packet size determined by the scheduling unit; and
a multiplexing unit configured to multiplex the transmission packet to be retransmitted and the packet segmented by the segmentation/concatenation unit.

In one aspect of the present invention, there is provided a mobile station for retransmitting a transmission packet in response to a retransmission request for the transmission packet from a base station, including:
a retransmission control unit configured to receive the retransmission request from the base station;
a transmission format determining unit configured to determine an available packet size on the same logical channel as used for the transmission packet, when channel quality at the time of retransmitting the transmission packet in response to the retransmission request is improved compared to channel quality at the time of initially transmitting the transmission packet;
a segmentation/concatenation unit configured to segment a packet to be transmitted on the same logical channel as used for the transmission packet based on the available packet size determined by the transmission format determining unit; and
a multiplexing unit configured to multiplex the transmission packet to be retransmitted and the packet segmented by the segmentation/concatenation unit.

In one aspect of the present invention, there is provided a communication method of retransmitting, at a transmitting apparatus, a transmission packet in response to a retransmission request for the transmission packet from a receiving apparatus, comprising the steps of:
receiving the retransmission request from the receiving apparatus;
determining an available packet size on the same logical channel as used for the transmission packet, when channel quality at the time of retransmitting the transmission packet in response to the retransmission request is improved compared to channel quality at the time of initially transmitting the transmission packet;
segmenting a packet to be transmitted on the same logical channel as used for the transmission packet based on the determined available packet size; and
multiplexing the transmission packet to be retransmitted and the segmented packet.

### [Effect of the Invention]

According to an embodiment of the present invention, it is possible to efficiently use radio resources and to maintain quality of service at the time of retransmission.

### BRIEF DESCRIPTION OF THE DRAWINGS

Fig. 1 shows a protocol stack for radio interfaces.
Fig. 2 shows a process for transmitting user data at a base station.
Fig. 3 shows a process for transmitting user data in a PDCP layer.
Fig. 4 shows a process for transmitting user data in an RLC layer.
Fig. 5 shows a process on the time axis for transmitting a retransmission packet from a base station to a mobile station.
Fig. 6 shows the amount of information able to be transmitted on the time axis when channel quality is improved.
Fig. 7 shows a block diagram of a base station in accordance with one embodiment of the present invention.

### DESCRIPTION OF THE PREFERRED EMBODIMENTS

### [Description of Notations]

10 base station
101 SDU buffer
103 segmentation/concatenation unit
105 PDU buffer
107 retransmission control unit
109 scheduling unit
111 multiplexing unit
113 transmitting unit

### [Best Mode of Carrying Out the Invention]

With reference to the accompanying drawings, a description is given below with regard to preferred embodiments of the present invention.

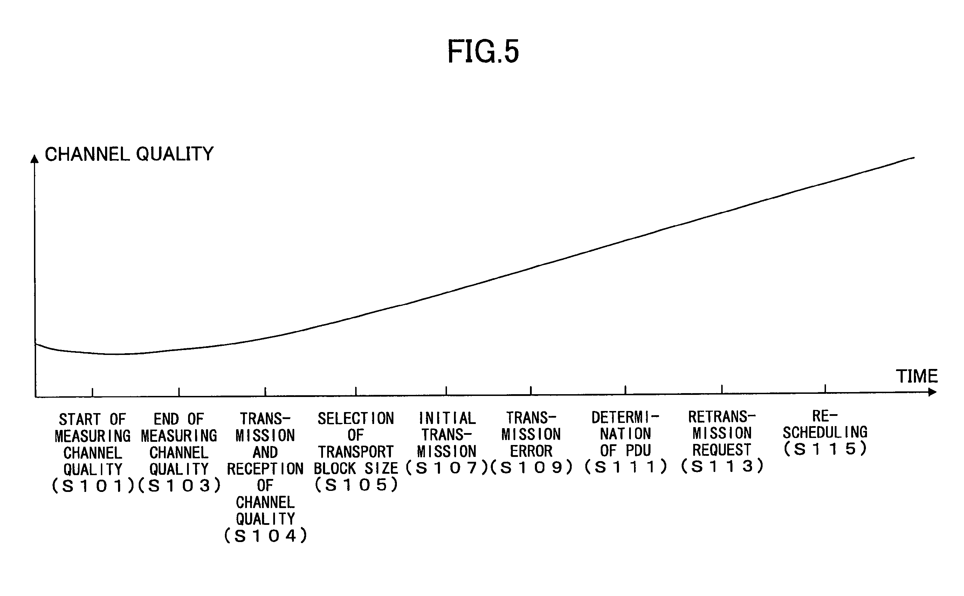

Fig. 5 shows a process on the time axis for transmitting a retransmission packet from a base station to a mobile station. The vertical axis in Fig. 5 represents channel quality (quality of the radio link).

Before the base station transmits a packet to the mobile station, the mobile station measures channel quality (S101). When the measurement of channel quality has been completed (S103), the mobile station reports the channel quality to the base station (S104). The base station selects a transport block size based on the received channel quality (S105). A packet to be transmitted has an optimum transport block size which is adaptively selected based on the measurement result of channel quality. The base station transmits the packet with the optimum transport block size to the mobile station (S107). When the mobile station detects an error in the packet (S109), the mobile station determines which RLC PDU should be retransmitted corresponding to the packet (S111). Then, the mobile station transmits a retransmission request to the base station (S113). When the base station receives the retransmission request from the mobile station, the base station performs re-scheduling based on the channel quality continuously reported from the mobile station (S115).

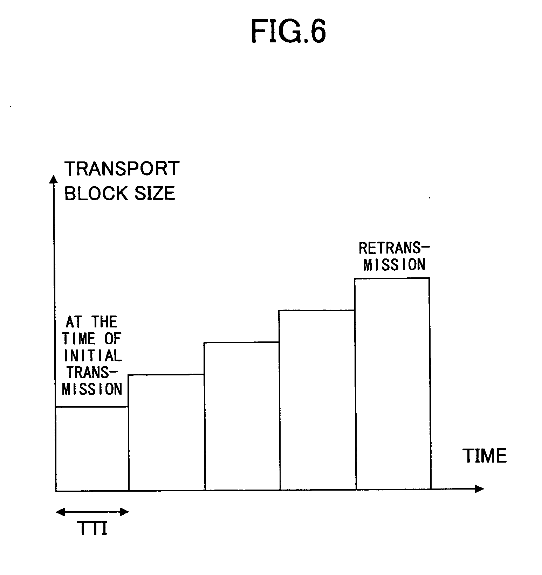

Focusing attention on channel quality at the time of retransmission, channel quality may be improved compared to channel quality at the time of initial transmission (S107). Since the amount of information able to be transmitted increases in this case, the transport block size also increases. In other words, the amount of information able to be transmitted within one TTI (Transmission Time Interval) also increases, as shown in Fig. 6.

Retransmitting the same packets as transmitted at the time of initial transmission when channel quality is improved causes unused radio resources. Therefore, a base station in accordance with one embodiment of the present invention multiplexes a packet to be transmitted on the same logical channel as used for the retransmission packet into the unused radio resources. Specifically, when the base station cannot fill a transport block with an RLC PDU to be retransmitted, the base station multiplexes another RLC PDU to be transmitted on the same logical channel into the transport block and fully uses the transport block. In this manner, the base station can efficiently use radio resources at the time of retransmission. In addition, the base station multiplexes a packet to be transmitted on the same logical channel as used for the retransmission packet, that is, a packet with the same level of QoS. Accordingly, quality of service can be maintained at the time of retransmission.

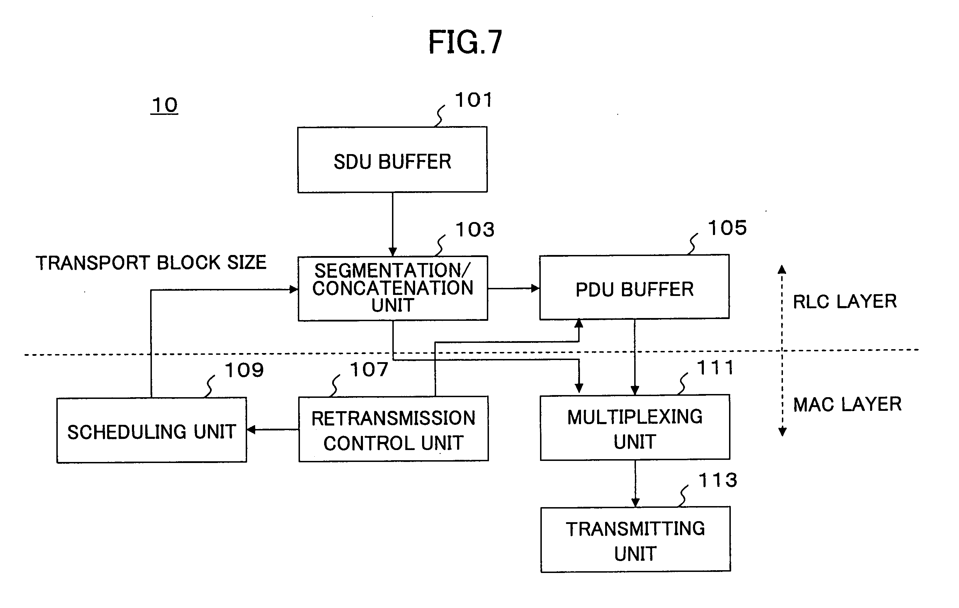

Fig. 7 shows a block diagram of a base station 10 in accordance with one embodiment of the present invention. The base station 10 includes an SDU buffer 101, a segmentation/concatenation unit 103, a PDU buffer 105, a retransmission control unit 107, a scheduling unit 109, a multiplexing unit 111, and a transmitting unit 113. Although those units are separated into the MAC layer and the RLC layer in Fig. 7, those units may not be necessarily implemented as shown in Fig. 7. For example, the retransmission unit 107 may be included in the RLC layer.

The SDU buffer 101 stores data (RLC SDUs) received by the RLC layer from the PDCP layer in Fig. 4. The segmentation/concatenation unit 103 corresponds to the segmentation/concatenation in Fig. 4. As described above, the segmentation/concatenation unit 103 segments or concatenates the data (RLC SDUs) stored in the SDU buffer 101 into the RLC PDU(s) with a suitable size according to the instruction from the scheduling unit 109 in the MAC layer. The segmented RLC PDUs are stored in the PDU buffer 105.

The retransmission control unit 107 provides the size of the retransmission packet to the scheduling unit 109 referring to the PDU buffer 105, upon receiving a retransmission request from the mobile station. The scheduling unit 109 determines an available transport block size (transport block size available for transmission) based on channel quality continuously received from the mobile station. At the time of initial transmission, the scheduling unit 109 provides to the segmentation/concatenation unit 103 a transport block size suitable for initial transmission. At the time of retransmission, on the other hand, the scheduling unit 109 provides to the segmentation/concatenation unit 103 an RLC PDU size (an RLC PDU size available for transmission on the same logical channel as used for the retransmission packet) which is derived by subtracting the size of the retransmission packet from the available transport block size.

The multiplexing unit 111 multiplexes the data segmented by the segmentation/concatenation unit 103 and data stored in the PDU buffer 105. Then, the transmitting unit 113 transmits the multiplexed data to the mobile station. The base station 10 may attach a logical channel identifier to a header for each packet, when the data segmented by the segmentation/concatenation unit 103 and the data stored in the PDU buffer 105 are multiplexed.

As described above, the retransmission control unit 107 provides the size of the retransmission packet to the scheduling unit 109 referring to the PDU buffer 105, upon receiving a retransmission request from the mobile station. The scheduling unit 109 provides to the segmentation/concatenation unit 103 an RLC PDU size which is derived by subtracting the size of the retransmission packet from the transport block size suitable for retransmission based on channel quality received from the mobile station. When channel quality is improved, the transport block size at the time of retransmission is larger than the transport block size at the time of initial transmission. The segmentation/concatenation unit 103 segments the data on the same logical channel stored in the SDU buffer 101 into the RLC PDU(s) with the size provided by the scheduling unit 109. The multiplexing unit 111 multiplexes the retransmission data and the data on the same logical channel stored in the SDU buffer 101. The transmitting unit 113 transmits the multiplexed data to the mobile station.

In this manner, the base station 10 can efficiently use radio resources at the time of retransmission. In addition, the base station 10 can transmit data on the same logical channel to the mobile station with the same level of QoS. For example, the base station 10 can transmit VoIP data and best-effort data to the mobile station with the levels predetermined for the respective logical channels, rather than transmitting the VoIP data and the best-effort data with the same transport block.

Although the embodiment is described with reference to the base station 10, the present invention is also applicable to a mobile station with a similar structure. Such a mobile station can also efficiently use radio resources at the time of retransmission. The mobile station includes a transmission format determining unit (not shown) instead of the scheduling unit 109 in the base station 10.

When the mobile station receives a retransmission request, the mobile station also receives radio resource allocation information scheduled by the scheduling unit 109 in the base station 10. When channel quality is improved, the mobile station multiplexes a retransmission packet and a packet to be transmitted on the same logical channel as used for the retransmission packet. Consequently, a similar effect can be achieved.

This international patent application is based on Japanese Priority Application No. 2006-127997 filed on May 1, 2006, the entire contents of which are incorporated herein by reference.

## Claims

1. A base station for retransmitting a transmission packet in response to a retransmission request for the transmission packet from a mobile station, comprising:
a retransmission control unit configured to receive the retransmission request from the mobile station;
a scheduling unit configured to determine an available packet size on the same logical channel as used for the transmission packet, when channel quality at the time of retransmitting the transmission packet in response to the retransmission request is improved compared to channel quality at the time of initially transmitting the transmission packet;
a segmentation/concatenation unit configured to segment a packet to be transmitted on the same logical channel as used for the transmission packet based on the available packet size determined by the scheduling unit; and
a multiplexing unit configured to multiplex the transmission packet to be retransmitted and the packet segmented by the segmentation/concatenation unit.

2. The base station as claimed in Claim 1, further comprising:
a header attachment unit configured to attach a logical channel identifier to a header for each packet, when the transmission packet to be retransmitted and the packet segmented by the segmentation/concatenation unit are multiplexed.

3. A mobile station for retransmitting a transmission packet in response to a retransmission request for the transmission packet from a base station, comprising:
a retransmission control unit configured to receive the retransmission request from the base station;
a transmission format determining unit configured to determine an available packet size on the same logical channel as used for the transmission packet, when channel quality at the time of retransmitting the transmission packet in response to the retransmission request is improved compared to channel quality at the time of initially transmitting the transmission packet;
a segmentation/concatenation unit configured to segment a packet to be transmitted on the same logical channel as used for the transmission packet based on the available packet size determined by the transmission format determining unit; and
a multiplexing unit configured to multiplex the transmission packet to be retransmitted and the packet segmented by the segmentation/concatenation unit.

4. The mobile station as claimed in Claim 3, further comprising:
a header attachment unit configured to attach a logical channel identifier to a header for each packet, when the transmission packet to be retransmitted and the packet segmented by the segmentation/concatenation unit are multiplexed.

5. A communication method of retransmitting, at a transmitting apparatus, a transmission packet in response to a retransmission request for the transmission packet from a receiving apparatus, comprising the steps of:
receiving the retransmission request from the receiving apparatus;
determining an available packet size on the same logical channel as used for the transmission packet, when channel quality at the time of retransmitting the transmission packet in response to the retransmission request is improved compared to channel quality at the time of initially transmitting the transmission packet;
segmenting a packet to be transmitted on the same logical channel as used for the transmission packet based on the determined available packet size; and
multiplexing the transmission packet to be retransmitted and the segmented packet.

6. The communication method as claimed in Claim 5, further comprising the step of:
attaching a logical channel identifier to a header for each packet, when the transmission packet to be retransmitted and the segmented packet are multiplexed.
